(19) Europäisches Patentamt

European Patent Office

Office européen des brevets

(11) Veröffentlichungsnummer: **0 545 162 B1**

(12) **EUROPÄISCHE PATENTSCHRIFT**

(45) Veröffentlichungstag der Patentschrift: **09.08.95**

(21) Anmeldenummer: **92119755.4**

(22) Anmeldetag: **20.11.92**

(51) Int. Cl.⁶: **C01B 17/90**

(54) **Verfahren zur Abtrennung organischer Phosphorverbindungen und weiterer Verunreinigungen aus verdünnter Schwefelsäure.**

(30) Priorität: **02.12.91 DE 4139651**

(43) Veröffentlichungstag der Anmeldung:
**09.06.93 Patentblatt 93/23**

(45) Bekanntmachung des Hinweises auf die
Patenterteilung:
**09.08.95 Patentblatt 95/32**

(84) Benannte Vertragsstaaten:
**AT BE CH DE DK ES FR GB IT LI LU NL SE**

(56) Entgegenhaltungen:
**EP-A- 0 041 134**
**EP-A- 0 061 193**
**EP-A- 0 175 919**
**DE-A- 3 235 030**
**US-A- 2 766 275**

(73) Patentinhaber: **HOECHST AKTIENGESELL-SCHAFT**

**D-65926 Frankfurt am Main (DE)**

(72) Erfinder: **Diekhaus, Gerhard, Dr. Dipl.-Chem.**
**Walsumermarkfstrasse 89**
**W-4200 Oberhausen (DE)**
Erfinder: **Kappesser, Harald**
**Waidmannsweg 24**
**W-4200 Oberhausen (DE)**

**Beschreibung**

Die Erfindung betrifft ein Verfahren zur Reinigung von Schwefelsäure, die z.B. als Abfallprodukt bei der Herstellung sulfonierter Arylphosphine gebildet wird und organische Phosphorverbindungen sowie weitere Verunreinigungen enthält.

In den Arylresten sulfonierte Triarylphosphine haben, insbesondere zusammen mit Rhodiumverbindungen in Wasser gelöst, als Katalysatoren verbreitet Eingang in die chemische Technik gefunden. Man setzt sie u.a. mit Erfolg bei der Hydroformylierung von Olefinen ein (vgl. DE 26 27 354 B1), addiert in ihrer Gegenwart cyclische Amine an konjugierte Diene (vgl. EP 0 176 398 A1) oder verwendet sie als Katalysatoren für die Hydrierung organischer Verbindungen.

Zur Herstellung sulfonierter Triarylphosphine geht man nach der Lehre der DE 32 35 030 A1 von Triarylphosphinen aus, die bei 0 bis 40 °C mit Oleum umgesetzt werden. Nach Beendigung der Reaktion verdünnt man das Sulfonierungsgemisch mit Wasser und extrahiert das sulfonierte Triarylphosphin mit einem wasserunlöslichen Amin, das in einem wasserunlöslichen organischen Lösungsmittel gelöst ist. Organische und wäßrige Phase werden voneinander getrennt. Aus der organischen Phase wird das sulfonierte Triarylphosphin gewonnen, z.B. durch Behandlung mit der wäßrigen Lösung einer anorganischen Base.

Die wäßrige Phase besteht im wesentlichen aus verdünnter Schwefelsäure (auch als Abfallsäure bezeichnet) mit einem Säuregehalt von 25 bis 35 Gew.-%. Sie ist durch wasserlösliche Phosphorverbindungen und weitere Substanzen, die den CSB-Wert (etwa 5 bis 25 g/l) bedingen, verunreinigt.

Der CSB-Wert, die Abkürzung CSB steht für chemischen Sauerstoffbedarf, ist eine Kenngröße für den Verschmutzungsgrad von Abwässern. Sie ist die als Sauerstoff-Äquivalent ausgedrückte Menge Kaliumdichromat, die von den oxidierbaren Inhaltsstoffen eines Liters Wasser verbraucht wird. Die Bestimmung des CSB-Wertes erfolgt nach einer normierten Arbeitsweise. Sie ist z.B. in Ullmanns Encyclopädie der Technischen Chemie, 4. Auflage (1981), Band 6, Seiten 376 ff, beschrieben. Unter wasserlöslichen organischen Phosphorverbindungen sind sulfonierte Triarylphosphine und deren Folge- und Abbauprodukte zu verstehen. Ist das sulfonierte Triarylphosphin z.B. das Sulfonierungsprodukt des Triphenylphosphins, dann finden sich in der Abfallsäure u.a. (in Klammern sind die im folgenden verwendeten Abkürzungen der Verbindungen aufgeführt) die Phosphine

| | |
|---|---|
| Tri(m-sulfophenyl)phosphin | (TPPTS) |
| Di(m-sulfophenyl)phenylphosphin | (TPPDS) |
| Di(phenyl)(m-sulfophenyl)phosphin | (TPPMS) |

ferner die durch Oxidation gebildeten Phosphinoxide

| | |
|---|---|
| Tri(m-sulfophenyl)phosphinoxid | (TPPOTS) |
| Di(m-sulfophenyl)phenylphosphinoxid | (TPPODS) |

und in kleinen Mengen die durch Reduktionsprozesse entstandenen Phosphinsulfide

| | |
|---|---|
| Tri(m-sulfophenyl)phosphinsulfid | (TPPSTS) |
| Di(m-sulfophenyl)phenylphosphinsulfid | (TPPSDS) |

Aus wirtschaftlichen Gründen ist man bestrebt, die Abfallsäure unmittelbar und nicht indirekt, d.h. durch Aufkonzentrieren, Spaltung zu $SO_2$ und katalytische Oxidation des Schwefeldioxids in chemischen Prozessen einzusetzen. Bedingung hierfür ist die Beseitigung der in ihr gelösten Verunreinigungen.

Aus der EP 41 134 A2 ist es bekannt, wasserlösliche Salze aromatischer Sulfonsäuren aus Sulfiergemischen mit Hilfe wasserunlöslicher Amine abzutrennen. Zu diesem Zweck wird das Sulfiergemisch mit Wasser verdünnt und anschließend mit einer der Sulfonsäure äquivalenten Menge eines lösungsmittelfreien Amins vermischt. Die Sulfonsäure bildet ein lipophiles Ammoniumsalz, das sich spontan von der wäßrigen Phase trennt. Vorausgesetzt wird bei diesem präparativen Verfahren, daß das Sulfiergemisch im wesentlichen frei von unsulfoniertem Ausgangsmaterial und anderen Neutralsubstanzen ist. Eine solche Forderung erfüllen Abfallprodukte chemischer Prozesse im allgemeinen nicht, denn es ist nie auszuschließen, daß Neutralsubstanzen, wenn auch nur in geringen Mengen, durch Neben- und Folgereaktionen als Verunreini-

EP 0 545 162 B1

gungen gebildet werden. Überdies liegen Reinigungsoperationen keine präparativen Verfahren zugrunde, sie lassen sich eher als analytische Prozesse beschreiben, bei denen selbst nur in Spuren vorhandene Stoffe erfaßt und abgetrennt werden müssen.

Es bestand daher die Aufgabe, eine Arbeitsweise bereitzustellen, die es erlaubt, sulfonierte organische Phosphorverbindungen und sonstige Verbindungen wie Verunreinigungen aus verdünnter Schwefelsäure sicher zu entfernen. Diese Arbeitsweise soll keinen Einschränkungen unterliegen, wirtschaftlich sein und sehr reine Schwefelsäure liefern.

Gelöst wird diese Aufgabe durch ein Verfahren zur Abtrennung sulfonierter organischer Phosphorverbindungen und sonstiger Verbindungen wie Verunreinigungen aus verdünnter Schwefelsäure mittels eines in Wasser schwer- oder unlöslichen Amins. Es ist dadurch gekennzeichnet, daß man die verdünnte Schwefelsäure mit 40 bis 90 mol des in Wasser schwer- oder unlöslichen Amins je mol in der Säure gelöst enthaltener Sulfonsäurereste ($-SO_3H$) extrahiert.

Überraschenderweise gelingt es nach dem erfindungsgemäßen Prozeß, auch stark verunreinigte Schwefelsäure soweit von in ihr enthaltenen Fremdstoffen zu befreien, daß ihre Qualität der von noch nicht gebrauchter Schwefelsäure entspricht. Besonders hervorzuheben ist die Selektivität des Reinigungsverfahrens, die trotz Anwendung eines hohen Aminüberschusses, bezogen auf die in der Schwefelsäure als Verbindungen gelösten Sulfonsäurereste, erreicht wird. Durch die Extraktion mit einem wasserunlöslichen Amin werden gezielt die Verunreinigungen, insbesondere die Sulfonsäurereste enthaltenden organischen Phosphorverbindungen entfernt, während die Schwefelsaure mit dem Amin nur in untergeordnetem Maße reagiert. Dadurch wird sichergestellt, daß die Schwefelsäure in sehr hoher Ausbeute zurückgewonnen wird.

Als Ausgangsstoff wird in das erfindungsgemäße Verfahren verdünnte Schwefelsäure eingesetzt, die aus der Sulfonierung von Arylphosphinen herrührt. Wie bereits weiter oben geschildert, bleibt die Schwefelsäure verdünnt und durch Reste des Reaktionsproduktes, durch Nebenprodukte und durch weitere organische Stoffe unbekannter Zusammensetzung verunreinigt nach Abtrennung des sulfonierten Arylphosphins zurück.

Die Konzentration der Schwefelsäure beträgt zwischen 25 und 35 Gew.-%, die Konzentration der Phosphorverbindungen als den wichtigsten Verunreinigungen, liegt zwischen 150 und 600 Gew.-ppm P. Die genannten Bereiche geben lediglich Richtwerte wieder, die sowohl über- als auch unterschritten werden können. Sie hängen insbesondere von der Durchführung der Sulfonierung und der Abtrennung des Reaktionsproduktes aus dem Reaktionsgemisch ab.

Erfindungsgemäß extrahiert man die in der Schwefelsäure enthaltenen Verunreinigungen mit Hilfe eines in Wasser schwer- oder unlöslichen Amins. Die erforderliche Aminmenge bemißt sich nach der Menge der in Lösung befindlichen Sulfonsäurereste. Die Menge muß analytisch ermittelt werden, z. B. durch Hochdruck-Flüssigkeitschromatographie (HPLC). Je mol in der Schwefelsäure gelöst enthaltener Sulfonsäurereste wendet man 40 bis 90 mol des Amins an, vorzugsweise setzt man 60 bis 80 mol Amin ein.

Als in Wasser schwerlösliche oder unlösliche Amine kommen acyclische oder cyclische aliphatische, aromatische, araliphatische und heterocyclische primäre, sekundäre oder tertiäre, vorzugsweise sekundäre oder tertiäre Amine in Betracht. Bevorzugt werden acyclische, verzweigte oder unverzweigte aliphatische Amine mit insgesamt 10 bis 60, insbesondere 13 bis 36 Kohlenstoffatomen. Beispiele für solche Verbindungen sind Tri-n-hexylamin, Tri-n-octylamin, Tri-isooctylamin (in Form des Isomerengemisches), Di-2-ethylhexylamin, Tri-isononylamin (in Form des Isomerengemisches), Isotridecylamin (in Form des Isomerengemisches), Di-isononyl-2-phenylpropylamin, Isononyl-di-2-phenylpropylamin, Tri-isotridecylamin (in Form des Isomerengemischs), N,N-dimethyl-hexadecylamin, N,N-dimethyl-octadecylamin. Als Extraktionsmittel besonders bewährt haben sich Isotridecylamin, Tri-n-octylamin und Tri-isooctylamin.

Die Amine werden zur Extraktion als Lösung in einem mit Wasser nicht oder nur wenig mischbaren organischen Lösungsmittel eingesetzt. Die Konzentration des Amins in der Lösung kann sich über einen weiten Bereich erstrecken. Sie wird im wesentlichen durch die Löslichkeit der Aminsalze im Lösungsmittel und durch die Viskosität der anfallenden Salzlösung begrenzt. Dementsprechend enthalten die Lösungen üblicherweise 10 bis 50, vorzugsweise 15 bis 35 Gew.-% Amin, bezogen auf die Lösung. Für die Auswahl des Lösungsmittels sind vorwiegend seine physikalischen Eigenschaften maßgebend. Erwünscht sind geringe Löslichkeit in Wasser, geringe Verdunstung und geringe oder keine Neigung zur Bildung von Emulsionen. Das Lösungsmittel soll darüber hinaus inert, nicht toxisch und preisgünstig sein, gutes hydrodynamisches Verhalten zeigen und auch für sonstige in den Abwässern gelöste Verunreinigungen gutes Extraktionsvermögen besitzen. Geeignete Lösungsmittel sind kerosinähnliche Fraktionen, Aromatenfraktionen, $C_4$-$C_{20}$-Alkohole, $C_8$-$C_{20}$-Ether. Bevorzugt werden kerosinähnliche Fraktionen, d.h. Kohlenwasserstoffe mit Siedetemperaturen zwischen 175 und 325 °C und Toluol.

Die Extraktion erfolgt in der Regel bei normaler Temperatur und normalem Druck, jedoch sind hiervon abweichende Bedingungen, z. B. erhöhter Druck nicht ausgeschlossen.

3

Die Weiterverarbeitung der organischen Phase zur Überführung der Verunreinigungen in eine konzentrierte wäßrige Lösung und zur Regenerierung des Amins kann auf verschiedene Weise erfolgen. So hat es sich bewährt, die Aminphase mit der wäßrigen Lösung einer anorganischen Base zu reextrahieren. Geeignete Verbindungen sind die Hydroxide der Alkali- und Erdalkalimetalle, insbesondere Natriumhydroxid, daneben auch die Alkalicarbonate. Die Base wird als 5 bis 30 Gew.-%ige Lösung eingesetzt und, bezogen auf Amin, vorzugsweise in stöchiometrischer Menge, gegebenenfalls in einem Überschuß bis zu 20 %, verwendet. Ein größerer Überschuß an Base fügt der wäßrigen Lösung, die die Verunreinigungen in konzentrierter Form enthält, einen weiteren, unerwünschten Lösungsbestandteil zu und sollte daher vermieden werden. Ein anderes, erfolgreich angewandtes Verfahren zur Aufbereitung der Aminphase ist ihre Behandlung mit Dampf. Zu diesem Zweck wird Dampf von mindestens 1,8 MPa in die Aminlösung eingeleitet. Rhodium und die Verunreinigungen gehen dabei in die Wasserphase über, die z.B. durch Dekantieren von der Aminphase getrennt wird.

Das nach der Behandlung mit einer Base oder mit Dampf wiedergewonnene Amin kann zusammen mit dem verwendeten Lösungsmittel erneut zur Reinigung verunreinigter Schwefelsäure nach dem erfindungsgemäßen Verfahren eingesetzt werden. Von Zeit zu Zeit kann es, ebenso wie das Lösungsmittel, z.B. durch Destillation gereinigt werden.

Das erfindungsgemäße Verfahren wird diskontinuierlich und vorzugsweise kontinuierlich ausgeführt, wobei die für extraktive Stofftrennungen üblichen Apparate wie Extraktionskolonnen und Mixer-settler angewandt werden. Man kann ein- und mehrstufig arbeiten.

Die gereinigte Säure kann unmittelbar oder nach Aufkonzentrieren in chemischen Prozessen, z. B. zur Düngemittelherstellung eingesetzt werden.

Die nachfolgenden Beispiele beschreiben die Erfindung, beschränken sie jedoch nicht auf diese speziellen Ausführungsformen.

Beispiele

In den Beispielen wird Abfallschwefelsäure eingesetzt, deren Konzentration und Phosphorgehalt in der nachfolgenden Tabelle aufgeführt wird.

Schwefelsäure und eine Lösung von Tri-isooctylamin in Toluol (20 Gew.-% Amin, bezogen auf die Lösung) als Extraktionsmittel werden nacheinander in einem Rührwerksreaktor gegeben. Man rührt 30 min bei Raumtemperatur und trennt darauf die beiden Phasen. Die gereinigte Schwefelsäure kann unmittelbar in chemischen Prozessen eingesetzt werden. Die Aminlösung wird durch 30 min Rühren mit wässriger NaOH-Lösung reextrahiert. Die nach Phasentrennung anfallende Wasserphase enthält in konzentrierter Lösung, die aus der Schwefelsäure entfernten Verunreinigungen. Die Amin-/Toluollösung kann erneut als Extraktionsmittel eingesetzt werden.

Die Extraktionsbedingungen und die Ergebnisse der Schwefelsäurereinigung sind ebenfalls in der Tabelle zusammengestellt. Die Beispiele 1 bis 5 beschreiben das Verfahren der Erfindung, in den Beispielen 6 und 7, die Vergleichsbeispiele darstellen, wird unter Bedingungen gearbeitet, die außerhalb der neuen Arbeitsweise liegen.

## Tabelle

| Beispiel | Abfallsäure | | Verhältnis TiOA/RSO$_3$H (mol/mol) | H$_2$SO$_4$-Ausbeute (%) | gereinigte Säure | | |
|---|---|---|---|---|---|---|---|
| | H$_2$SO$_4$-Konzentration (Gew.-%) | P-Konzentration (Gew.-ppm) | | | H$_2$SO$_4$-Konzentr. (Gew.-%) | P-Konzentration (Gew.-ppm) | CSB (mg/l) |
| 1 | 29,70 | 227 | 68,29 | 61,78 | 21,70 | 2,8 | 384 |
| 2 | 29,60 | 258 | 40,16 | 88,23 | 27,40 | 33,7 | 263 |
| 3 | 29,40 | 263 | 80,00 | 70,77 | 23,70 | 5,2 | 363 |
| 4 | 29,30 | 258 | 62,71 | 71,20 | 23,00 | 11,0 | 263 |
| 5 | 29,60 | 266 | 59,87 | 82,57 | 25,80 | 14,8 | 845 |
| 6 (Vergleich) | 32,60 | 441 | 10,62 | 88,65 | 30,50 | 81,0 | |
| 7 (Vergleich) | 33,12 | 422 | 12,88 | 83,18 | 28,53 | 55,0 | |

## Patentansprüche

1. Verfahren zur Abtrennung sulfonierter organischer Phosphorverbindungen und sonstiger Verbindungen wie Verunreinigungen aus verdünnter Schwefelsäure mittels eines in Wasser schwer- oder unlöslichen

5

Amins, dadurch gekennzeichnet, daß man die etwa 150 bis 600 Gew.-ppm Phosphor enthaltende verdünnte Schwefelsäure mit 40 bis 90 mol des in Wasser schwer- oder unlöslichen Amins je mol in der Säure gelöst enthaltener Sulfonsäurereste (-SO$_3$H) extrahiert.

2. Verfahren nach Anspruch 1, dadurch gekennzeichnet, daß man mit 60 bis 80 mol des in Wasser schwer- oder unlöslichen Amins je mol in der Säure gelöst enthaltenen Sulfonsäurerestes extrahiert.

3. Verfahren nach Anspruch 1 oder 2, dadurch gekennzeichnet, daß man mit einem acyclischen verzweigten oder unverzweigten sekundären oder tertiären aliphatischen Amin mit insgesamt 10 bis 60, insbesondere 13 bis 36 Kohlenstoffatomen extrahiert.

4. Verfahren nach Anspruch 3, dadurch gekennzeichnet, daß man als Amin Tri-isooctylamin einsetzt.

5. Verfahren nach einem oder mehreren der Ansprüche 1 bis 4, dadurch gekennzeichnet, daß das Amin in einem mit Wasser nicht oder nur wenig mischbaren organischen Lösungsmittel gelöst ist.

6. Verfahren nach Anspruch 5, dadurch gekennzeichnet, daß das Amin in einer kerosinähnlichen Fraktion oder Toluol gelöst ist.

7. Verfahren nach Anspruch 5 oder 6, dadurch gekennzeichnet, daß die Konzentration des in dem organischen Lösungsmittel gelösten Amins 10 bis 50, vorzugsweise 15 bis 35 Gew.-%, bezogen auf die Lösung, beträgt.

**Claims**

1. A process for removing sulfonated organic phosphorus compounds and other compounds such as impurities from dilute sulfuric acid by means of an amine which is sparingly soluble or insoluble in water, characterised in that the dilute sulfuric acid containing approx. 150 to 600 wt. ppm of phosphorus is extracted with 40 to 90 mol of the amine which is sparingly soluble or insoluble in water per mole of the sulfuric acid radicals (- SO$_3$H) contained in dissolved form in the acid.

2. A process according to claim 1, characterised in that extraction is carried out with 60 to 80 mol of the amine sparingly soluble or insoluble in water per mole of the sulfonic acid radical contained in dissolved form in the acid.

3. A process according to claim 1 or 2, characterised in that the extraction is carried out with an acyclic branched or unbranched secondary or tertiary aliphatic amine having a total of 10 to 60, in particular 13 to 36 carbon atoms.

4. A process according to claim 3, characterised in that tri-isooctylamine is used as the amine.

5. A process according to one or more of claims 1 to 4, characterised in that the amine is dissolved in an organic solvent which is immiscible or only slightly miscible with water.

6. A process according to claim 5, characterised in that the amine is dissolved in a kerosine-like fraction or toluene.

7. A process according to claim 5 or 6, characterised in that the concentration of the amine dissolved in the organic solvent is 10 to 50, preferably 15 to 35 % by weight, related to the solution.

**Revendications**

1. Procédé de séparation de composés organiques sulfonés du phosphore et d'autres composés, constituant des impuretés, de l'acide sulfurique dilué, séparation réalisée à l'aide d'une amine peu soluble ou insoluble dans l'eau, procédé caractérisé en ce qu'on soumet l'acide sulfurique dilué, contenant environ 150 à 600 ppm en poids (millionièmes) de phosphore, à de l'extraction avec 40 à 90 mol de l'amine, peu soluble ou insoluble dans l'eau, par mole des restes acides sulfoniques (-SO$_3$H) contenus en dissolution dans l'acide.

6

**2.** Procédé selon la revendication 1, caractérisé en ce qu'on extrait avec 60 à 80 mol de l'amine, peu soluble ou insoluble dans l'eau, par mole des restes acides sulfoniques contenus en dissolution dans l'acide.

**3.** Procédé selon la revendication 1 ou 2, caractérisé en ce qu'on extrait à l'aide d'une amine aliphatique acyclique, ramifiée ou non ramifiée, secondaire ou tertiaire, comportant au total 10 à 60, notamment 13 à 36, atomes de carbone.

**4.** Procédé selon la revendication 3, caractérisé en ce qu'on utilise comme amine la tri-isooctylamine.

**5.** Procédé selon une ou plusieurs des revendications 1 à 4, caractérisé en ce que l'amine est dissoute dans un solvant organique non miscible à l'eau ou qui n'est que peu miscible à l'eau.

**6.** Procédé selon la revendication 5, caractérisé en ce que l'amine est dissoute dans une fraction analogue à du kérosène ou dans du toluène.

**7.** Procédé selon la revendication 5 ou 6, caractérisé en ce que la concentration de l'amine dissoute dans le solvant organique est de 10 à 50, avantageusement de 15 à 35% en poids, par rapport à la solution.